# EUROPÄISCHE PATENTSCHRIFT

(11) **EP 2 715 234 B1**
(45) Veröffentlichungstag und Bekanntmachung des Hinweises auf die Patenterteilung: **13.12.2017**
(21) Anmeldenummer: 12725345.8
(22) Anmeldetag: 23.05.2012
(51) Int. Cl.: F23L 15/02, C04B 35/573, C04B 35/80

(54) **VERFAHREN ZUR HERSTELLUNG EINES WÄRMEÜBERTRAGERS**
METHOD FOR MANUFACTURING A HEAT EXCHANGER
PROCÉDÉ DE FABRICATION D'UN ÉCHANGEUR DE CHALEUR

(30) Priorität: 25.05.2011 DE 102011103106
(43) Veröffentlichungstag der Anmeldung: 09.04.2014
(73) Patentinhaber: Technische Universität Bergakademie Freiberg, 09599 Freiberg (DE); Scuola Universitaria Professionale della Svizzera Italiana, 6928 Manno (CH); Erbicol SA, 6828 Balerna (CH); Institut Francais du Textile et de l'Habillement, 59656 Villeneuve d'Ascq (FR)
(72) Erfinder: TRIMIS, Dimosthenis, 90762 Fürth (DE); UHLIG, Volker, 09569 Oederan (DE); EDER, Robert, 09599 Freiberg (DE); ORTONA, Alberto, CH-6978 Gandria (CH); GIANELLA, Sandro, CH-6528 Camorino (CH); ROMELLI, Luca, CH-6926 Montagnola (CH); BOULET, Emmanuel, F-69250 Poleymieux au Mont d'Or (FR); LE BLAN, Therry, F-59910 Bondues (FR); CHAZELAS, Claire, F-59000 Lille (FR)
(74) Vertreter: Dr. Gassner & Partner mbB
(86) Internationale Anmeldenummer: PCT/EP2012/059600
(87) Internationale Veröffentlichungsnummer: WO 2012/160095

(56) Entgegenhaltungen:
- DE-A1- 10 326 951
- GB-A- 2 390 569
- US-A1- 2003 129 338
- F. C. Campbell: "Manufacturing Technology for Aerospace Structural Materials", 1. Januar 2006 (2006-01-01), ELSEVIER, XP55036076, ISBN: 978-1-85-617495-4 Seiten 488-492,

## Beschreibung

Bei Rekuperatorbrennern handelt es sich um komplexe Hochleistungs-Brennersysteme, bei denen die Prozesswärme der Abgase unmittelbar am Brenner an die zugeführte Verbrennungsluft übertragen wird. Das geschieht nach dem Wärmetauscherprinzip, indem die zurückströmenden Gase direkt am Brenner über die Außenwand des Rekuperators geleitet werden. Dort wird ein großer Teil der Abgaswärme an die zugeführte Verbrennungsluft abgegeben. Für einen optimalen Wärmeübergang ist die Oberfläche dieses Rekuperators durch Wellen, Rippen, Zacken oder Noppen vergrößert.
Erste Rekuperatorbrenner wurden aus wärmebeständigem Chrom-Nickel-Stahl hergestellt. Der Nachteil dieser Rekuperatorbrenner besteht darin, dass diese Systeme nur bis zur Zundergrenze des Stahls von ca. 1100 °C eingesetzt werden können. Deshalb wurden Rekuperatorbrenner entwickelt, die teilweise oder vollständig aus keramischen Materialien bestehen. Diese Bauteile bestehen vorrangig aus SiSiC. Dabei handelt es sich um einen zweiphasigen keramischen Werkstoff mit einem Anteil von ca. 85 bis 94 % SiC und 6 bis 15 % freiem Silizium [Informationszentrum Technische Keramik (Hrsg.): Brevier, Technische Keramik. Fahner Verlag. Lauf, 1999. ISBN 3 -924158-36-3] .
Nachteilig bei keramischen Rekuperatorbrennern sind der geringe Wirkungsgrad und die vergleichsweise größeren Abmessungen, da keramische Rohre bisher nur in einfachen Formgebungen hergestellt werden können. So ist in DE 19 616 288 A1 ein Rekuperator aus keramischem Material mit einfach strukturierten Noppen, hergestellt durch einen herkömmlichen Gießprozess beschrieben. Bei DE 4 011 190 A1 besteht der ringförmige Rekuperator aus einer Innenwand, einer wärmeübertragenden Mittelwand und einer Außenwand, wobei die Mittelwand als Faltenwand ausgebildet ist. Deren Falten liegen sowohl an der Innenwand als auch an der Außenwand an. DE 10 326 951 A1 offenbart einen Rekuperator, der einen als Wärmeaustauschfläche mit strömenden Fluiden dienenden Rohrabschnitt aufweist, an dem eine Mehrzahl von spiralförmig zur Längsachse des Rekuperators verlaufende wellenförmig ausgebildete Falten vorgesehen sind. Er soll sich besonders günstig im Schlickergussverfahren herstellen lassen. Nachteilig bei den vorgenannten keramischen Rekuperatoren sind die trotz Noppen und Falten geringe Wärmeaustauschfläche und ein vergleichsweise geringer Wärmeübergangskoeffizient im Vergleich zu den Strukturen, die sich mit metallischen Werkstoffen als Wärmeübertrager realisieren lassen.

In der Gebrauchsmusterschrift DE 29 923 473 U1 wird deshalb vorgeschlagen, zwei Rekuperatoren miteinander zu kombinieren, wobei die Trennwand des ersten Rekuperators aus Metall und die Trennwand des zweiten Rekuperators aus Keramik besteht. Verbunden damit ist ein höherer Herstellungsaufwand.

DE 19 518 296 A1 beschreibt einen Rekuperatorbrenner, bei dem in die ringförmige Luftführung und in die ringförmige Abgasführung je eine rohrförmige Matte aus Draht eingelegt sind. Die Matten erwärmen sich und erhöhen die Wärmeübertragung durch Wärmeabstrahlung. Oberhalb 900 °C verbessert sich der Rekuperator-Wirkungsgrad zunehmend gegenüber dem eines Rippenrekuperators. Die Matten übertragen die Wärme allerdings nur durch die Wärmestrahlung. Bei niedrigeren Temperaturen sind sie wirkungslos.

Aus dem Stand der Technik ist die Keramisierung von Polymeren bekannt. Die DE 10 030 011 A1 beinhaltet Formteile aus von Polymeren abgeleiteter Keramik und DE 10 207 860 A1 beinhaltet poröse Siliziumkarbid-Keramik und Verfahren zu ihrer Herstellung.

Die US 2003/129338 A1 offenbart einen Wärmeübertrager aus keramischem Material mit einer oberflächenvergrößernden, strukturierten Wärmeübertragungsfläche, welche ein- oder beidseitig über eine keramische Zwischenschicht mit einer keramischen Struktur beschichtet ist. Die keramische Struktur ist unter Verwendung eines mit einem keramischen Schlicker durchtränkten Textilmaterials hergestellt.

Aus F. C. Campbell: Manufacturing Technology for Aerospace Structural Materials", 1. Januar 2006, ELSEVIER, Seiten 488-492 ist ein Verfahren zur Herstellung eines Bauteils aus einem Kompositmaterial mit keramischer Matrix (CMC) bekannt. Dabei wird zunächst eine poröse Vorform des Bauteils hergestellt, welche nachfolgend mit einem keramischen Schlicker infiltriert wird. Nach dem Entfernen einer Schlickerträgerflüssigkeit wird die so hergestellte keramische Vorform mit flüssigem Silizium infiltriert.

Die DE 103 26 951 A1 offenbart einen Rekuperator für einen Rekuperatorbrenner. Der Rekuperator weist einen Rohrabschnitt auf, der als Wärmeaustauschfläche mit strömenden Fluiden dient und eine Mehrzahl von Falten aufweist. Die Falten verlaufen spiralförmig zur Längsachse des Rekuperators. Der Rekuperator ist aus einer SiC-Keramik hergestellt.

Der Erfindung liegt die technische Aufgabe zugrunde die Nachteile nach dem Stand der Technik zu überwinden. Es soll insbesondere die Wärmeübertragung in keramischen Wärmeübertragern von niedrigen bis zu hohen Temperaturen verbessert werden. Nach einem weiteren Ziel der Erfindung soll ein einfaches Verfahren zur Herstellung einer feingliedrigen keramischen Strukturierung bei einer Wärmeübertragungsfläche angegeben werden.

Diese Aufgabe wird durch die Merkmale des Anspruchs 1 gelöst. Zweckmäßige Ausgestaltungen der Erfindung ergeben sich aus den Ansprüchen 2 bis 11.

Bei einem Wärmeübertrager ist vorteilhafterweise die aus einem gasdichten keramischen Grundkörper gebildete Wärmeübertragungsfläche über eine keramische Zwischenschicht mit einer aus Textilverfahren abgeleiteten Struktur beschichtet. Die über die keramische Zwischenschicht verbundene textilabgeleitete Struktur kann im Heiz- und im Kühlraum des Wärmeübertragers angeordnet sein.

In einer Vorzugsvariante hat die textilabgeleitete Struktur die Form von drahtförmigen Bögen, die regellos oder strukturiert auf der Wärmeübertragungsfläche angeordnet sind. Auch kurze freistehenden zylinderförmigen Fadenstrukturen oder Schlaufen sind geeignete Beschichtungen. Weitere durch textile Herstellungsverfahren erzeugte Strukturen sind möglich.

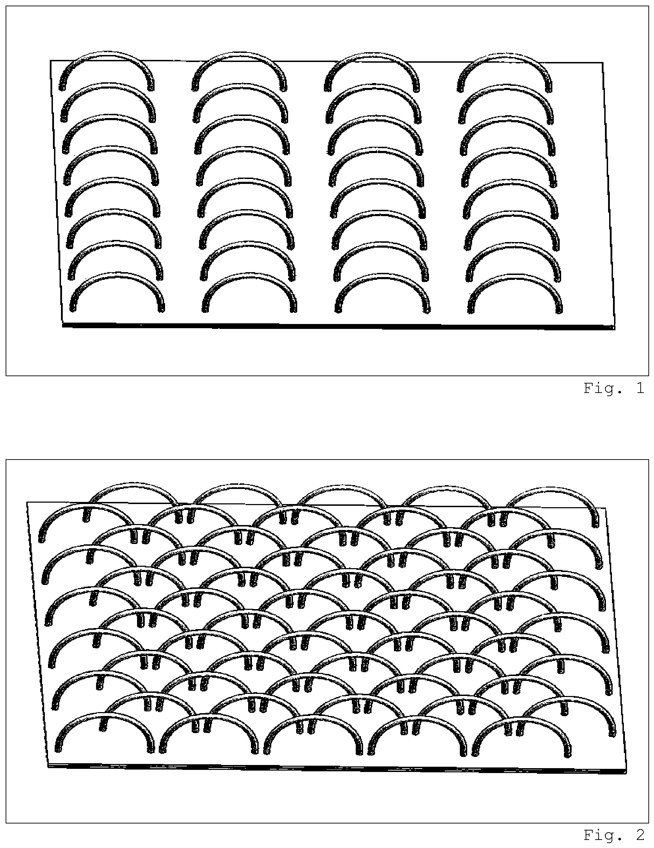

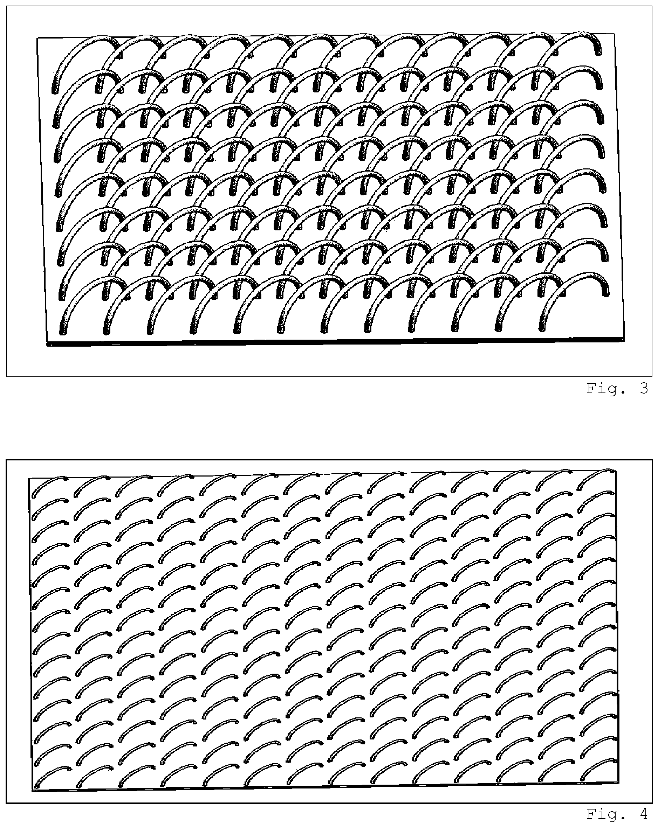

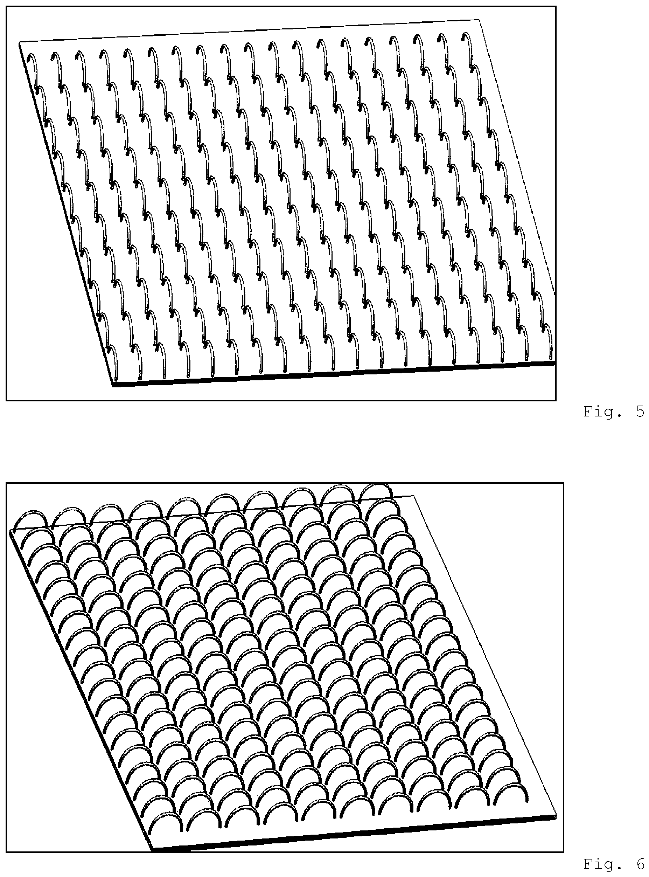

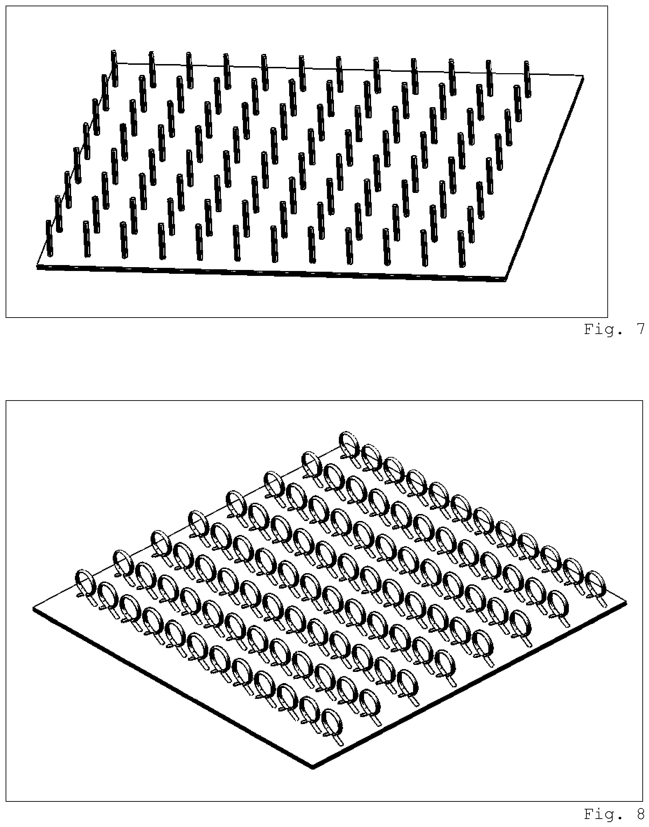

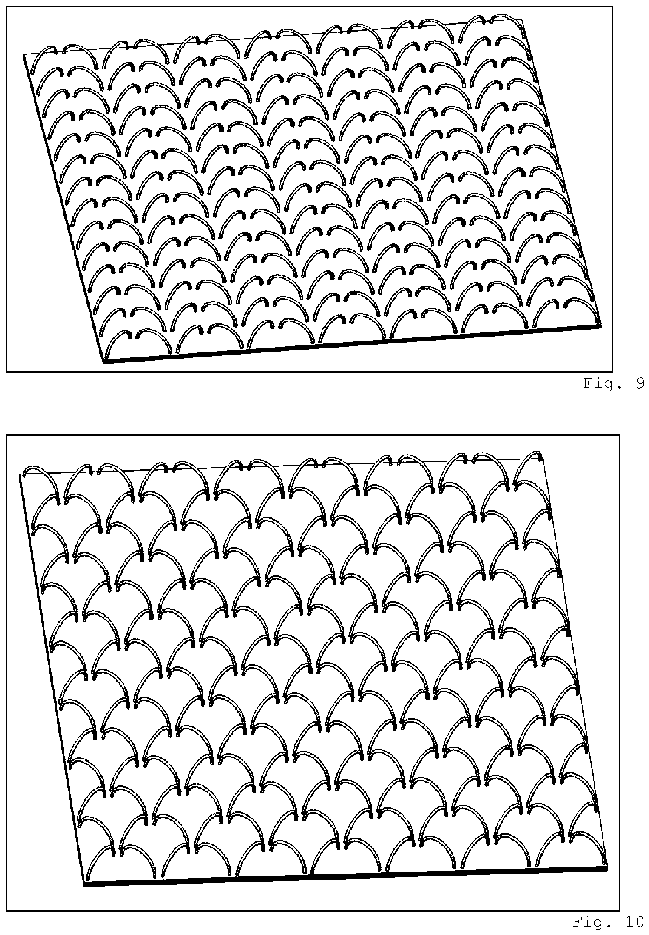

Mögliche Strukturen zeigen Fig. 1 bis Fig. 10. Durch die feste Anbindung dieser Strukturierungen über die keramische Zwischenschicht an die Wärmeübertragungsfläche resultiert eine erhebliche Vergrößerung der Oberfläche der Wärmeübertragungsfläche. Die Wärmeübertragung vom heißen zum kalten Medium wird durch die textilabgeleiteten Strukturen wesentlich verbessert, indem die Strömungs- und Temperaturgrenzschichten aufgebrochen werden, sowie wirbelbehaftete Nachlaufströmungen einen intensiven Wärmetransport bewirken. Des Weiteren kann Wärme über Leitung durch die textilabgeleitete Struktur an den gasdichten Grundkörper transportiert werden, ähnlich wie bei einer Berippung. Analog findet dieser Vorgang auf der gegenüberliegenden Seite des gasdichten Grundkörpers statt.

Das Textilmaterial besteht vorteilhafterweise aus einem Grundtextil, in das strukturierte Gewebeteile eingebunden sind. Das Grundtextil kann die Form eines losen Gewebes oder eines losen Gitters oder die Form eines engmaschigen Gewebes oder Gitters haben und aus verschiedenen Gewebearten, vorzugsweise mit Köper-, Leinwand- oder Atlasbindung, bestehen.

Die strukturierten Gewebeteile können Bögen, Schlaufen und/oder kurze Fäden sein. Die Bögen, Schlaufen und/oder Fäden sind in Größe, Höhe und Breite sowie bezüglich der geometrischen Anordnung auf dem Grundtextil variabel gestaltbar. Sowohl das Grundtextil als auch die in das Grundtextil eingebundenen strukturierten Gewebeteile können aus Naturstoffen wie Baumwolle oder Leinen oder aus Kunststoffen wie Polyethylen, Polypropylen oder Polyester bestehen. Einsetzbar sind handelsübliche Gewebe aus der großindustriellen Herstellung. Es sind auch speziell entwickelte Textilmaterialien einsetzbar.

Besonders geeignet sind Textilmaterialien aus Polyester oder Polypropylen, die bis zu 25 % Massenanteile SiC-Pulver, insbesondere SiC-Nanopulver, enthalten.

Durch das Textilmaterial und dessen geometrische Anordnung auf der Wärmeübertragerfläche wird deren spätere Struktur vorbestimmt.

Das Textilmaterial kann in Form eines Schlauches, Strumpfes bzw. Gestrickes auf einen Grundkörper aufgezogen werden. Textile Matten oder Streifen können aufgespannt oder aufgelegt und zweckmäßigerweise verbunden werden. Der mit dem Textilmaterial versehene Grundkörper wird mit einem keramischen Schlicker beschichtet. Es ist insbesondere bei einem Textilmaterial mit einem engmaschigen Grundtextil zweckmäßig, den Grundkörper und/oder die nicht strukturierten Seiten des Textilmaterials mit dem keramischen Schlicker zu beschichten, dann das Textilmaterial auf den Grundkörper aufzubringen und den mit dem Textilmaterial versehenen Grundkörper mit dem Schlicker zu beschichten.

Die Zusammensetzung des Schlickers sollte einem Schlicker zur Herstellung des Grundkörpers entsprechen, diesem zumindest aber ähnlich sein. Die Konsistenz des Schlickers wird über das Verhältnis keramische Partikel zu Binder so eingestellt, dass der Schlicker leicht in Gewebehohlräume eindringen und der überflüssige Schlicker problemlos abtropfen kann. Besonders geeignet sind Binder auf Kunstharzbasis.

Im Zuge der Wärmebehandlung entsteht ein monolithisches Produkt, und durch die Infiltration mit flüssigem Silizium erhöht sich die mechanische Stabilität der gebildeten textilabgeleiteten Strukturen.

Durch das Herstellungsverfahren wird eine feingliedrige, mechanisch sehr stabile aber auch gasdichte keramische Oberfläche erhalten, die über übliche keramische Formgebungsverfahren nicht herstellbar ist.

Die Erfindung wird nunmehr beispielhaft anhand der Zeichnungen näher erläutert. Es zeigen:
- Fig. 1: eine schematische perspektivische Ansicht eines ersten Textilmaterials,
- Fig. 2: eine schematische perspektivische Ansicht eines zweiten Textilmaterials,
- Fig. 3: eine schematische perspektivische Ansicht eines dritten Textilmaterials,
- Fig. 4: eine schematische perspektivische Ansicht eines vierten Textilmaterials,
- Fig. 5: eine schematische perspektivische Ansicht eines fünften Textilmaterials,
- Fig. 6: eine weitere Ansicht des fünften Textilmaterials,
- Fig. 7: eine schematische perspektivische Ansicht eines sechsten Textilmaterials,
- Fig. 8: eine schematische perspektivische Ansicht eines siebten Textilmaterials,
- Fig. 9: eine schematische perspektivische Ansicht eines achten Textilmaterials,
- Fig. 10: eine schematische perspektivische Ansicht eines neunten Textilmaterials,
- Fig. 11: eine schematische perspektivische Teilansicht gemäß Fig. 1,
- Fig. 12: Ansichten des in Fig. 11 gezeigten ersten Textilmaterials,
- Fig. 13: eine schematische Schnittansicht bei einem ersten Verfahrensschritt,
- Fig. 14: eine schematische Schnittansicht bei einem zweiten Verfahrensschritt,
- Fig. 15: eine schematische Schnittansicht bei einem dritten Verfahrensschritt und
- Fig. 16: eine schematische Schnittansicht durch ein Rekuperatorrohr.

Die in den Figuren gezeigten Textilmaterialien sind jeweils aus einem Grundtextil 2 gebildet, in welches strukturierte Gewebeteile 1 eingebunden sind. Bei den strukturierten Gewebeteilen 1 kann es sich um Bögen, Schleifen, zylindrische stabartige Strukturen oder um Kombinationen davon handeln. Die strukturierten Gewebeteile 1 sind in dem mit dem Bezugszeichen 2 bezeichneten Grundtextil derart eingebunden, dass sie auch bei einer Infiltration bzw. Durchtränkung mit einem Schlicker formstabil sind. Das Grundtextil 2 kann aus einem Gewebe oder einem Gewirk gebildet sein.

Die Erfindung soll anhand des nachfolgenden Ausführungsbeispiels erläutert werden:

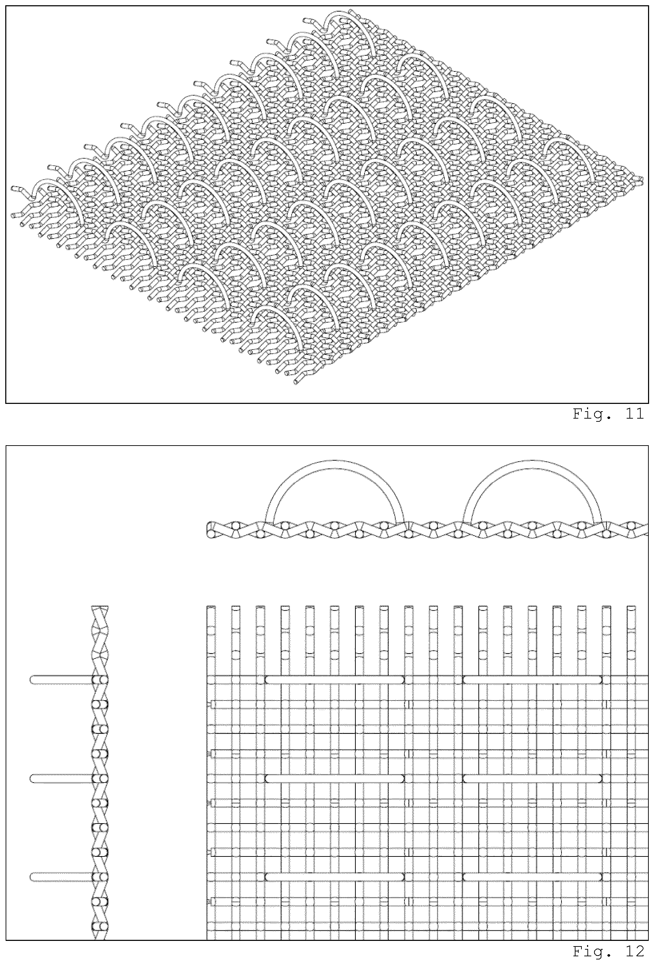

Auf ein handelsübliches Grundrohr aus SiSiC ohne Strukturierung wird innen und außen ein dreidimensionales Polypropylen-Gewebe aufgeklebt. Das Gewebe wurde aus Polypropylenfasergarn mit einer Stärke von 1 mm hergestellt. Die Struktur des Textilmaterials ist in Fig. 11 und Fig. 12 dargestellt. Der so erhaltene Rohling wird in einen SiC-Schlicker mit Kunstharz als Binder getaucht und der überflüssige Schlicker durch Abtropfen entfernt. Anschließend erfolgt eine Wärmebehandlung bei Temperaturen oberhalb von 1000 °C. Der Binder verflüchtigt sich beim Aufheizprozess bei Temperaturen von 300 bis 500 °C. Das wärmebehandelte Bauteil wird anschließend bei 1600 °C mit flüssigem Silizium infiltriert. Dazu wird das wärmebehandelte Bauteil mit einem Siliziumpulver bestreut, welches im Vakuumofen aufgeschmolzen wird. Das flüssige Silizium dringt aufgrund von Kapillarkräften in die Porenstruktur der textilabgeleiteten Bögen ein.

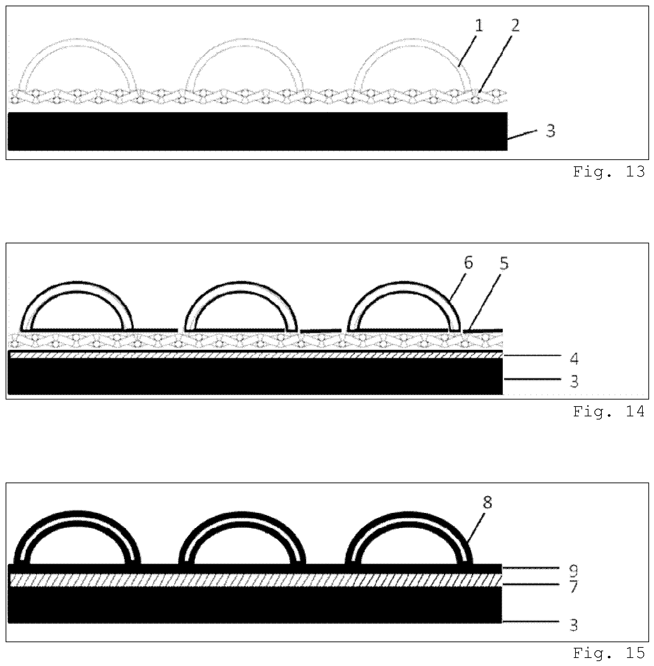

Die Fig. 13 bis 15 zeigen in schematischen Schnittansichten Schritte des erfindungsgemäßen Verfahrens. In Fig. 13 ist auf ein Grundrohr 3, welches beispielsweise aus SiC oder SiSiC hergestellt ist, das Textilmaterial aufgebracht. Das Textilmaterial kann hier beispielsweise nach Art eines Schlauchs ausgebildet sein, welcher über das Grundrohr 3 gezogen wird.

Anschließend wird das Textilmaterial in einen Schlicker, insbesondere in einen SiC-Schlicker, getaucht. Der SiC-Schlicker enthält einen SiC-Präkursor, organische Lösungsmittel, Kohlenstofflieferanten und einen Kunstharzbinder. - Der Schlicker infiltriert das textile Material sowie eine Grenzfläche zwischen dem textilen Material und dem Grundrohr 3. An der Grenzfläche zwischen dem Grundrohr 3 und dem textilen Material, insbesondere dem Grundtextil, bildet sich eine Zwischenschicht 4. Die Zwischenschicht 4 ist innig mit einer infiltrierten Grundtextilschicht 5 verbunden. Mit dem Bezugszeichen 6 ist ein mit dem Schlicker infiltriertes strukturiertes Gewebeteil bezeichnet.

Fig. 15 zeigt eine schematische Schnittansicht durch einen Wärmeübertrager nach dem Schritt der thermischen Behandlung des Schlickers, d. h. des Verarbeitens des Schlickers zu einer porösen Keramik, und dem nachfolgenden Verfahrensschritt der Infiltration der porösen Keramik mit flüssigem Silizium. Mit dem Bezugszeichen 7 ist die somit hergestellte keramische Zwischenschicht bezeichnet. Sie ist innig verbunden mit einer aus dem infiltrierten Grundtextil 5 hervorgegangenen keramischen Grundschicht 9, aus der sich nunmehr keramische Strukturen 8, beispielsweise Bögen oder dgl., erstrecken.

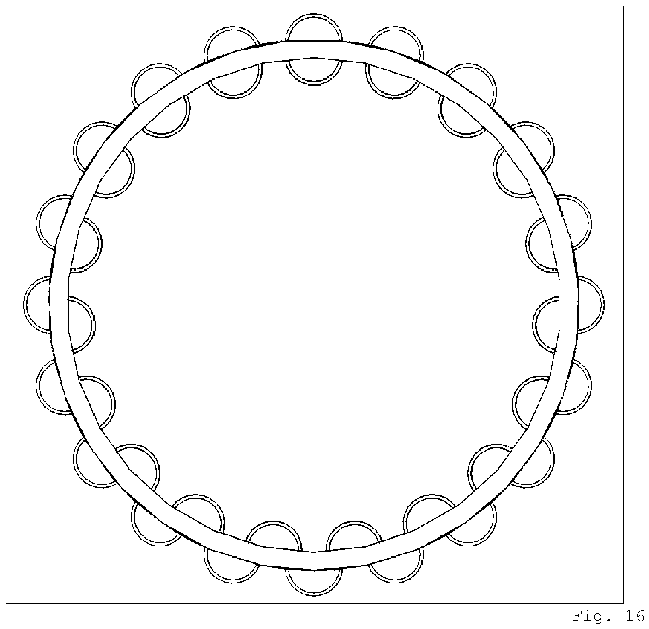

Es wird eine Rekuperatoroberfläche (Fig. 1) erhalten, die mit Halbbögen mit einer Höhe von 8 mm bei einem Durchmesser der Bögen von 1 mm und einer Bogendichte von 3472 Bögen pro m² versehen ist. Die Abstände der Bögen in Bogenlängsrichtung von Bogen zu Bogen betragen 24 mm, senkrecht zur Bogenlängsrichtung von Bogen zu Bogen 12 mm. Der Wärmeübergangskoeffizient ist im Vergleich zu einer glatten Oberfläche je nach Strömungsbedingungen mindestens um den Faktor 4 größer. Fig. 16 zeigt das fertige Wärmeübertragerrohr.

### Bezugszeichenliste

- 1: strukturiertes Gewebeteil
- 2: Grundtextil
- 3: SiC-Grundrohr
- 4: Zwischenschicht
- 5: infiltriertes Grundtextil
- 6: infiltriertes Gewebeteil
- 7: keramische Zwischenschicht
- 8: keramische Struktur
- 9: keramische Grundschicht

## Patentansprüche

1. Verfahren zur Herstellung eines Wärmeübertragers mit folgenden Schritten:
Bereitstellen eines aus einem keramischen Material bestehenden gasdichten, festen Grundkörpers (3) mit einer Wärmeübertragungsfläche,
Herstellen eines Rohlings, indem die Wärmeübertragungsfläche ein- oder beidseitig mit einem mit einem keramischen Schlicker durchtränkten und ummantelten Textilmaterial (1, 2) versehen wird,
thermische Behandlung des Rohlings unter inerten Bedingungen und
Infiltration des Rohlings mit flüssigem Silizium.

2. Verfahren nach Anspruch 1, **gekennzeichnet dadurch, dass** das Textilmaterial aus einem Grundtextil (2) mit darin eingebundenen strukturierten Gewebeteilen (1) besteht.

3. Verfahren nach Anspruch 2, **gekennzeichnet dadurch, dass** das Grundtextil (2) die Form eines losen Gewebes, eines losen Gitters, eines engmaschigen Gewebes oder engmaschigen Gitters hat.

4. Verfahren nach Anspruch 2 oder 3, **gekennzeichnet dadurch, dass** das Grundtextil (2) in Form eines Strumpfes oder Gestrickes auf den Grundkörper (3) aufgezogen wird.

5. Verfahren nach Anspruch 2 oder 3, **gekennzeichnet dadurch, dass** das Grundtextil (2) in Form eines Streifens oder Bandes auf den Grundkörper (3) aufwickelt oder aufgelegt wird.

6. Verfahren nach Anspruch 2 oder 3, **gekennzeichnet dadurch, dass** das Grundtextil (2) mittels eines keramischen Schlickers oder Klebers auf den Grundkörper (3) aufgebracht wird.

7. Verfahren nach einem der Ansprüche 2 bis 6, **gekennzeichnet dadurch, dass** das Grundtextil (2) aus einer Gewebeart mit Köper-, Leinwand- oder Atlasbindung besteht.

8. Verfahren nach einem der Ansprüche 2 bis 7, **gekennzeichnet dadurch, dass** die strukturierten Gewebeteile (1) Bögen und/oder kurze Fäden und/oder Schlaufen sind.

9. Verfahren nach einem der Ansprüche 1 bis 8, **gekennzeichnet dadurch, dass** das Textilmaterial aus Naturfasern und/oder synthetischen Fasern besteht.

10. Verfahren nach einem der Ansprüche 1 bis 9, **gekennzeichnet dadurch, dass** das Textilmaterial bis zu 25 % SiC enthält.

11. Verfahren nach einem der vorhergehenden Ansprüche, **gekennzeichnet dadurch, dass** als keramischer Schlicker ein Schlicker eingesetzt wird, der in der Zusammensetzung einem Schlicker zur Herstellung des Grundkörpers (3) entspricht.

## Claims

1. A process for the manufacture of a heat exchanger comprising the following steps:
providing a gas-proof solid base body (3) consisting of a ceramic material and having a heat exchange surface,
producing a blank by providing the heat exchange surface on one or both sides with a textile material (1, 2) impregnated with and encased in a ceramic slurry,
thermally treating the blank under inert conditions, and
infiltrating the blank with liquid silicon.

2. The process according to Claim 1, **characterized in that** the textile material consists of a base textile (2) having integrated therein structured woven fabric portions (1).

3. The process according to Claim 2, **characterized in that** the base textile (2) has the form of a loose woven fabric, a loose mesh, a close-knit woven fabric or a close-knit mesh.

4. The process according to Claim 2 or 3, **characterized in that** the base textile (2) is pulled onto the base body (3) in the form of a stocking or knitted fabric.

5. The process according to Claim 2 or 3, **characterized in that** the base fabric (2) is wound or laid onto the base body (3) in the form of a strip or band.

6. The process according to Claim 2 or 3, **characterized in that** the base textile (2) is applied to the base body (3) by means of a ceramic slurry or adhesive.

7. The process according to one of the Claims 2 to 6, **characterized in that** the base textile (2) consists of a type of woven fabric having twill, linen or satin weaves.

8. The process according to one of Claims 2 to 7, **characterized in that** the structured woven fabric portions (1) are bows and/or short threads and/or loops.

9. The process according to one of Claims 1 to 8, **characterized in that** the textile material consists of natural fibres and/or synthetic fibres.

10. The process according to one of Claims 1 to 9, **characterized in that** the textile material contains up to 25% SiC.

11. The process according to one of the preceding Claims, **characterized in that** as a ceramic slurry a slurry is used the composition of which corresponds to the slurry for the manufacture of the base body (3).

## Revendications

1. Procédé de fabrication d'un échangeur de chaleur comprenant les étapes suivantes:
mise à disposition d'un corps de base (3) solide, étanche au gaz, constitué d'un matériau céramique présentant une surface d'échange de chaleur,
fabrication d'une ébauche dans laquelle la surface d'échange de chaleur est munie sur un ou sur les deux côtés d'un matériau textile (1, 2) enrobé et imprégné d'une barbotine céramique,
traitement thermique de l'ébauche dans des conditions inertes et infiltration de l'ébauche avec du silicium liquide.

2. Procédé selon la revendication 1, **caractérisé en ce que** le matériau textile est constitué d'un textile de base (2) avec des parties de tissu structurées (1) qui y sont intégrées.

3. Procédé selon la revendication 2, **caractérisé en ce que** le textile de base (2) a la forme d'un tissu lâche, d'une grille lâche, d'un tissu à mailles serrées ou d'une grille à mailles serrées.

4. Procédé selon la revendication 2 ou 3, **caractérisé en ce que** le textile de base (2) est tendu sur le corps de base (3) sous forme de bas ou de tricotage.

5. Procédé selon la revendication 2 ou 3, **caractérisé en ce que** le textile de base (2) est enroulé ou appliqué sous forme de bande ou de ruban sur le corps de base (3).

6. Procédé selon la revendication 2 ou 3, **caractérisé en ce que** le textile de base (2) est appliqué sur le corps de base (3) au moyen d'une barbotine céramique ou d'une colle.

7. Procédé selon l'une des revendications 2 à 6, **caractérisé en ce que** le textile de base (2) est constitué d'un tissage présentant une armure sergée, une armure toile ou une armure satin.

8. Procédé selon l'une des revendications 2 à 7, **caractérisé en ce que** les parties de tissu structurées (1 ) sont des arcs et/ou des fils courts et/ou des boucles.

9. Procédé selon l'une des revendications 1 à 8, **caractérisé en ce que** le matériau textile est constitué de fibres naturelles et/ou de fibres synthétiques.

10. Procédé selon l'une des revendications 1 à 9, **caractérisé en ce que** le matériau textile contient jusqu'à 25% de SiC.

11. Procédé selon l'une des revendications précédentes, **caractérisé en ce qu'**une barbotine, qui correspond dans la composition à une barbotine pour la fabrication du corps de base (3), est utilisée comme barbotine céramique.
